# DEMANDE DE BREVET EUROPEEN

(11) **EP 1 006 381 A1**
(43) Date de publication de la demande: **07.06.2000**
(21) Numéro de dépôt: 99402930.4
(22) Date de dépôt: 25.11.1999
(51) Int. Cl.: G02B 6/38

(54) **Connecteur optique hermaphrodite**

(30) Priorité: 03.12.1998 FR 9815269
(71) Demandeur: Amphenol Socapex, 74311 Thyez Cedex (FR)
(72) Inventeur: Doit, Stéphane, 74400 Chamonix (FR); Pouyez, Philippe, 95100 Argenteuil (FR); Kayoun, Pierre-Henri, 92100 Boulogne Billancourt (FR)
(74) Mandataire: Dronne, Guy

(57) **Abrégé**

L'invention concerne un connecteur optique hermaphrodite et comprenant deux éléments de connexion identiques, chaque élément de connexion comprenant un boîtier (14) muni d'une face de connexion (12), et des terminaisons de conducteurs optiques (18), lesdites terminaisons occupant dans ladite face de connexion des positions symétriques par rapport à un axe d'hermaphrodisme contenu dans ladite face, et des moyens de connexion mécanique et de positionnement des deux éléments de connecteur comprenant n trous (24, 26, 28) ménagés dans ladite face et n pions (20, 22, 30) faisant saillie dans ladite face, un trou d'un élément de connecteur étant apte à recevoir le pion associé de l'autre élément de connecteur avec n supérieur à 1.

Il se caractérise en ce que chaque trou de connexion (24, 26, 28) d'un élément de connecteur est symétrique d'un pion (20, 22, 30) de connexion du même élément de connecteur par rapport audit axe d'hermaphrodisme (XX').

## Description

La présente invention concerne un connecteur optique du type hermaphrodite.

De façon plus précise la présente invention concerne un connecteur optique dans lequel les deux éléments de connexion optiques habituellement appelés respectivement mâle et femelle ont exactement la même structure notamment en ce qui concerne les parties d'interconnexion entre le premier élément de connexion et le deuxième élément de connexion.

Dans le cas de connecteurs optiques chaque élément de connexion comporte dans sa face de raccordement des terminaisons des conducteurs optiques, par exemple des fibres optiques, du câble raccordé à l'élément de connexion. Ces terminaisons optiques qui peuvent également consister en un système optique associé à chaque fibre optique sont disposées dans la face de connexion et sont rigoureusement positionnées par rapport au corps du connecteur. Pour réaliser un ensemble de connexion, il est bien sûr nécessaire de positionner rigoureusement les deux éléments de connexion l'un par rapport à l'autre de telle manière qu'on obtienne finalement un positionnement rigoureux des terminaisons optiques elles-mêmes.

Les terminaisons optiques se présentant exactement de la même manière dans chacun des deux éléments de connexion, il est intéressant de prévoir des moyens mécaniques de liaison et de positionnement relatifs des deux éléments de connexion du type hermaphrodite c'est-à-dire comme on l'a déjà indiqué du type dans lequel les deux éléments de connexion et notamment leurs éléments d'accouplement mécaniques sont rigoureusement identiques. On comprend en effet qu'ainsi on peut diminuer les coûts puisque tous les éléments de connexion montés aux extrémités des câbles peuvent être identiques.

Un objet de la présente invention est de fournir un élément de connexion optique dans lequel du type hermaphrodite c'est-à-dire dans lequel le connecteur est constitué par deux éléments de connexion rigoureusement identiques notamment en ce qui concerne les organes de positionnement et d'accouplement mécaniques.

Pour atteindre ce but selon l'invention le connecteur optique hermaphrodite comprenant deux éléments de connexion identiques, chaque élément de connexion comprenant un boîtier muni d'une face de connexion, et des terminaisons de conducteurs optiques, lesdites terminaisons occupant dans ladite face de connexion des positions symétriques par rapport à un axe d'hermaphrodisme contenu dans ladite face, et des moyens de connexion mécanique et de positionnement des deux éléments de connecteur comprenant n trous ménagés dans ladite face et n pions faisant saillie dans ladite face, un trou d'un élément de connecteur étant apte à recevoir le pion associé de l'autre élément de connecteur se caractérise en ce que
- n est au moins égal à trois ; et
- chaque trou de connexion d'un élément de connecteur est symétrique d'un pion de connexion du même élément de connecteur par rapport audit axe d'hermaphrodisme.

On comprend que grâce à la position symétrique par rapport à l'axe d'hermaphrodisme d'un pion de connexion et d'un trou de connexion on obtient effectivement une structure identique pour les deux éléments formant le connecteur optique. En outre, la présence d'au moins trois pions de connexion assure un positionnement rigoureux et une liaison efficace.

Selon un mode préféré de réalisation chaque pion de connexion d'un élément de connecteur est sensiblement tangent à un trou de connexion dudit élément de connexion.

Ce mode de réalisation est particulièrement intéressant dans le cas où le corps des éléments de connexion est réalisé par moulage. En effet, en raison de leur tangence on peut utiliser des noyaux de moulage de dimension plus importante permettant de réaliser à la fois le trou et l'orifice servant à l'insertion du pion de connexion.

De préférence, chaque pion de connexion présente une gorge de verrouillage à une distance prédéterminée de la face de connexion de l'élément de connecteur auquel il appartient et en ce que chaque élément de connecteur présente dans son boîtier une fente annulaire communiquant avec les trous de connexion et comporte une bague annulaire élastique de verrouillage montée dans ladite fente, ladite bague étant apte à pénétrer dans une partie de la gorge des pions de connexion de l'autre élément de connecteur lorsque les deux éléments de connecteur sont accouplés. Ce mode de solidarisation permet d'appliquer les faces de connexion de deux éléments du connecteur l'une sur l'autre avec une force suffisante.

D'autres caractéristiques et avantages de l'invention apparaîtront mieux à la lecture de la description qui suit de plusieurs modes de réalisation de l'invention donnés à titre d'exemple non limitatif. La description se réfère aux figures annexées sur lesquelles :
la figure 1 est une vue de face montrant le principe de positionnement des pions de connexion et des trous de connexion dans la face de connexion de l'élément de connexion ;
la figure 2 est une vue de face montrant un mode préféré de réalisation de l'élément de connexion ;
la figure 3 est une vue en coupe longitudinale d'un élément de connexion hermaphrodite ;
la figure 4 est une vue de détail de la figure 3 montrant le mode de liaison entre les deux éléments de connexion ; et
la figure 5 montre une variante de réalisation de la figure 2.

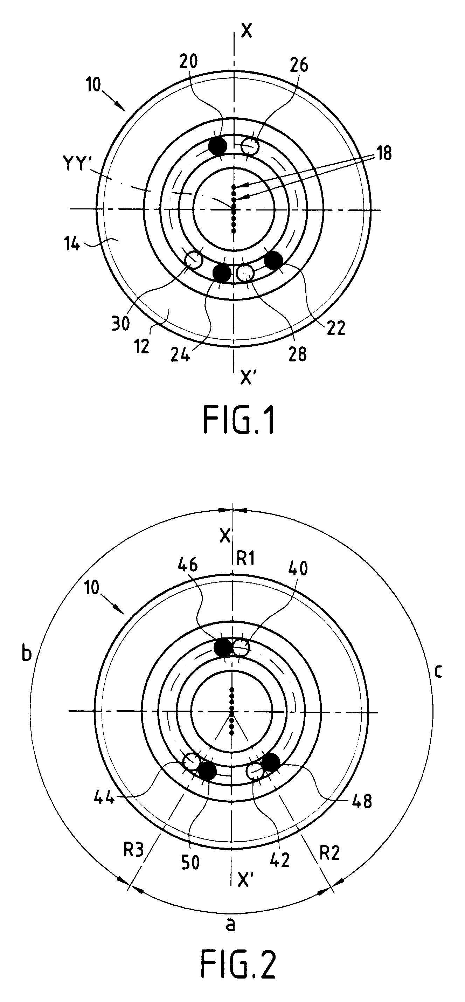

En se référant tout d'abord à la figure 1, on va décrire un premier mode de réalisation d'un élément de connexion du connecteur optique hermaphrodite. Sur cette figure 1, on a représenté la face de connexion 12 du corps cylindrique sensiblement cylindrique 14 d'un élément de connexion 10. Le corps 14 de l'élément de connexion présente un axe de révolution longitudinal Y-Y'. Dans la face 12 on a fait apparaître les terminaisons optiques 18 du câble relié à l'élément de connexion 10. Dans ce mode de réalisation les terminaisons optiques 18 sont au nombre de 8 et sont alignées dans cette face sur une droite X-X' qui correspond à un plan diamétral longitudinal du corps 14.

Dans ce mode de réalisation, pour assurer le positionnement relatif des deux éléments de connexion et leur liaison mécanique, on utilise trois pions de connexion 20, 22 et 24 ainsi que trois trous de connexion 26, 28 et 30. Chaque trou de connexion de l'élément 10 peut recevoir un pion de connexion du deuxième élément de connexion et symétriquement chaque pion de connexion de l'élément 10 peut pénétrer dans un trou de connexion du deuxième élément de connexion. Selon ce mode de réalisation pour réaliser le caractère hermaphrodite de l'élément de connexion chaque pion de connexion 20, 22 et 24 est symétrique d'un des trous de connexion 26, 28 et 30 par rapport à la droite d'hermaphrodisme X-X'. Sur la figure, le trou 26 est symétrique du pion 20, le trou 30 est symétrique du pion 22 et le trou 28 est symétrique du pion 24. Les trous et pions de connexion du deuxième élément de connexion occupent exactement les mêmes positions. Il va de soi que le nombre de pions et de trous de connexion pourrait être différent de trois.

On comprend qu'ainsi on peut obtenir deux éléments de connexion strictement identiques et aptes à coopérer entre eux.

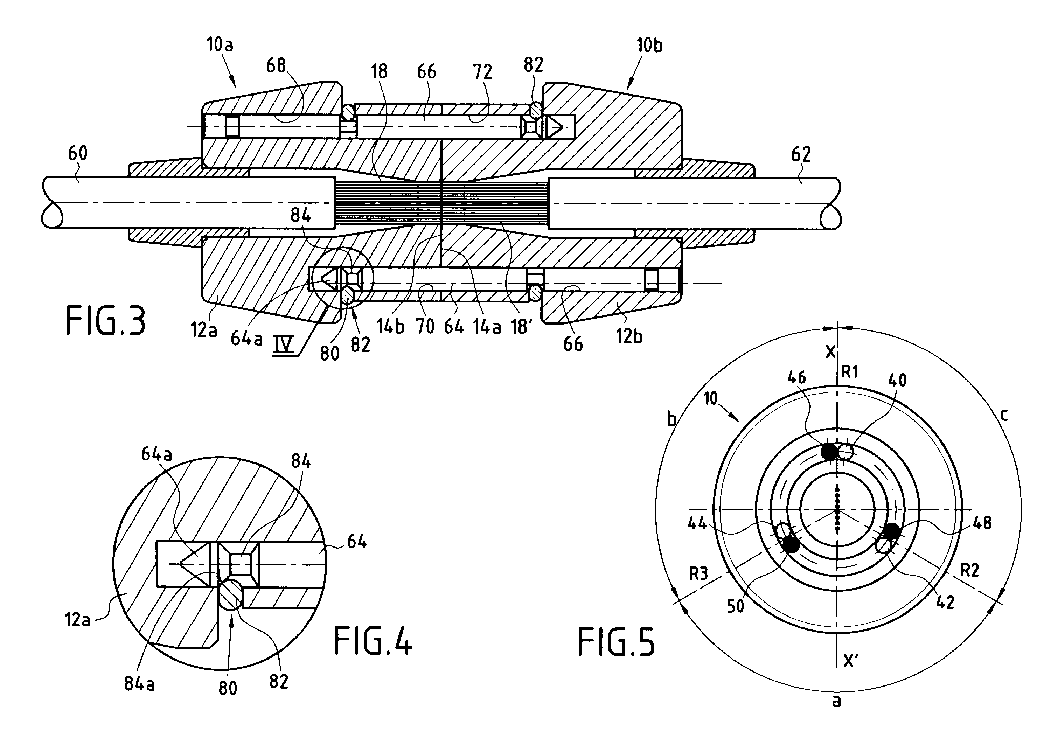

Sur la figure 5, on a représenté un mode préféré de positionnement des pions de connexion et des trous de connexion. Les trous de connexion portent alors les références 40, 42 et 44 alors que les pions de connexion portent les références 46, 48 et 50. Chaque pion de connexion est tangent à un trou de connexion et chaque couple de trous de connexion et de pions de connexion est tangent selon des rayons R1, R2 et R3 de la face de connexion qui font entre eux des angles a, b et c tous égaux à 120 degrés.

Dans cette disposition on reconstitue bien la situation de symétrie par rapport à l'axe d'hermaphrodisme X-X'. En outre, du fait de la tangence d'un pion et d'un trou c'est-à-dire de la tangence d'un trou de connexion et du trou destiné à recevoir le pion il est possible lors de la réalisation par moulage du corps de l'élément de connexion d'utiliser un unique noyau de moulage pour réaliser le trou de connexion et le trou de fixation du pion de connexion. La fabrication du corps dans le mode de réalisation de la figure 5 a une symétrie complète de révolution de 120°. Pour éviter des erreurs de positionnement relatif des deux éléments de connexion il est possible de prévoir que par exemple l'angle a entre les rayons R2 et R3 soit différent des angles b et c entre respectivement les rayons R1 et R3 et R3 et R2 qui eux doivent être égaux. C'est ce qui est représenté sur la figure 2. Il est également possible de prévoir que par exemple le trou de connexion 40 et le pion de connexion 46 ont des diamètres différents de ceux des autres pions et trous de connexion.

En se référant maintenant à la figure 3, on va décrire plus en détail un mode complet de réalisation du connecteur. Celui-ci est constitué par les deux éléments de connexion 10a et lOb qui sont identiques comme on l'a déjà expliqué.

Sur cette figure on a fait apparaître les corps 12b et 12a des éléments de connexion ainsi que les faces de connexion 14a et 14b. Sur cette figure, on a également représenté le câble optique 60 solidaire de l'élément de connexion 10a avec ses fibres optiques 18 dont les terminaisons sont dans le plan de connexion 14a et le câble optique 62 qui est solidaire de l'élément de connexion 10b et dont les fibres optiques 18' ont leurs terminaisons disposées dans la face de connexion 14b.

Sur cette figure on a également représenté un pion de centrage et de connexion par exemple 64 fixé dans l'alésage 66 du corps 12b de l'élément de connexion 10b et le pion de centrage 66 fixé dans l'alésage 68 du corps 12a de l'élément de connexion 10a. On a également représenté le trou de connexion 70 de l'élément de connexion 10a et le trou de connexion 72 de l'élément de connexion 10b. Pour assurer la liaison mécanique entre les éléments de connexion 10a et 10b, la périphérie du corps de l'élément de connexion est munie d'une gorge annulaire 80 qui communique avec les trous de connexion par exemple 70 ainsi qu'avec les trous par exemple 68 de fixation des pions de connexion. Dans cette gorge 80 est montée une bague de fixation élastique 82 qui fait saillie en particulier dans les trous de connexion tels que 70. Comme on le voit sur la figure 3, l'extrémité 64a du pion de connexion 64 est munie d'une gorge 84 qui présente une portée tronconique 84a dirigée vers l'extrémité 64a. On comprend que par l'action de la bague élastique de fixation 82 sur la portée tronconique 84a du pion de connexion on obtient un effet de force de serrage qui tend à appliquer les faces de connexion 14a et 14b des deux éléments de connexion l'une contre l'autre.

Dans la description précédente on a envisagé le cas où les terminaisons optiques 18 sont disposées sur l'axe d'hermaphrodisme XX'. On comprend qu'on ne sortirait pas de l'invention si, plus généralement, les terminaisons optiques occupaient des positions globalement symétriques par rapport à l'axe XX'.

Il va également de soi qu'on pourrait prévoir un nombre de trous et de pions de connexion supérieur à trois. Il faut alors que les trous et pions de chaque élément de connexion respectent les conditions de symétrie énoncées précédemment. Dans le cas de quatre ou plus de quatre pions et trous de connexion, le détrompage peut être obtenu en prévoyant que le polygone qui joint les axes des trous ou des pions comporte au moins un côté dont la longueur est différente de celle des autres côtés.

## Revendications

1. Connecteur optique hermaphrodite et comprenant deux éléments de connexion identiques, chaque élément de connexion comprenant un boîtier muni d'une face de connexion, et des terminaisons de conducteurs optiques, lesdites terminaisons occupant dans ladite face de connexion des positions symétriques par rapport à un axe d'hermaphrodisme contenu dans ladite face, et des moyens de connexion mécanique et de positionnement des deux éléments de connecteur comprenant n trous ménagés dans ladite face et n pions faisant saillie dans ladite face, un trou d'un élément de connecteur étant apte à recevoir le pion associé de l'autre élément de connecteur avec n supérieur à 1, caractérisé en ce que :
- le nombre n est au moins égal à trois ; et
- chaque trou de connexion d'un élément de connecteur est symétrique d'un pion de connexion du même élément de connecteur par rapport audit axe d'hermaphrodisme.

2. Connecteur optique selon la revendication 1, caractérisé en ce que chaque pion de connexion présente une gorge de verrouillage à une distance prédéterminée de la face de connexion de l'élément de connecteur auquel il appartient et en ce que chaque élément de connecteur présente dans son boîtier une fente annulaire communiquant avec les trous de connexion et comporte une bague annulaire élastique de verrouillage montée dans ladite fente, ladite bague étant apte à pénétrer dans une partie de la gorge des pions de connexion de l'autre élément de connecteur lorsque les deux éléments de connecteur sont accouplés.

3. Connecteur optique selon la revendication 2, caractérisé en ce que chaque gorge des pions de connexion comporte une portion tronconique apte à coopérer avec ladite bague annulaire pour exercer une force de rétention tendant à plaquer les faces planes de connexion l'une contre l'autre.

4. Connecteur optique selon l'une quelconque des revendications 1 à 3, caractérisé en ce que chaque pion de connexion d'un élément de connecteur est sensiblement tangent à un trou de connexion dudit élément de connecteur.

5. Connecteur selon l'une quelconque des revendications 1 à 4, caractérisé en ce que les trous et les pions de connexion sont cylindriques.

6. Connecteur selon l'une quelconque des revendications 1 à 5, caractérisé en ce que pour chaque élément de connecteur, au moins un trou de connexion et le pion de connexion qui lui est symétrique présentent des dimensions en section droite supérieures à celles des autres pions et trous de connexion.

7. Connecteur optique selon l'une quelconque des revendications 1 à 5, caractérisé en ce que le polygone qui joint entre eux les trous ou les pions de connexion d'un même élément de connecteur présente au moins un côté dont la longueur est différente de celle des autres côtés.

8. Connecteur optique selon l'une quelconque des revendications 1 à 7, caractérisé en ce que les terminaisons des conducteurs optiques sont disposées sur ledit axe d'hermaphrodisme.
